# EUROPEAN PATENT APPLICATION

(11) **EP 3 989 238 A1**
(43) Date of publication of application: **27.04.2022**
(21) Application number: 20306260.9
(22) Date of filing: 22.10.2020
(51) Int. Cl.: G21C 3/04, G21C 17/06, G21C 21/00

(54) **SYSTEM AND METHOD FOR INSPECTING NUCLEAR FUEL PELLETS**

(71) Applicant: Framatome, 92400 Courbevoie (FR)
(72) Inventor: FAYARD, Amaury, 1030 Schaerbeek (BE); TELLJOHANN, Axel, 75173 Pforzheim (DE)
(74) Representative: Lavoix

(57) **Abstract**

The inspection system comprises a supporting device (20) for supporting the fuel pellet(s) (4) such that the pellet axis (A) of each fuel pellet (4) coincides with a reference axis (B), and an optical measuring device (40) arranged for optically measuring the fuel pellet(s) (4), the optical measuring device (40) comprising a light emitter (42) configured for emitting a light beam propagating along an optical axis (C) and a light detector (46) arranged for receiving the light beam (44), wherein each fuel pellet (4) interrupts the light beam (44) and generates a shadow projected on the light detector (46), the optical measuring device (40) comprising a measuring module (48) configured for analyzing the shadow for detecting possible defects on the end faces (10) and/or the lateral face (8) of each fuel pellet (4).

## Description

The present invention relates to the technical field of manufacturing nuclear fuel rods, more particularly to the inspection of nuclear fuel pellets before insertion in claddings of the nuclear fuel rods.

A nuclear fuel assembly generally comprises a bundle of nuclear fuel rods. Each nuclear fuel rod comprises a tubular cladding encasing nuclear fuel pellets (hereinafter "fuel pellets") that are stacked inside the tubular cladding. The fuel pellets are made of a fissile material, for example of enriched uranium dioxide.

Each fuel pellet is generally rotationally symmetrical about a pellet axis. Each fuel pellet has the general shape of a cylinder comprising a substantially cylindrical lateral face and two end faces. The two end faces are generally symmetrical with respect to a median plan that is perpendicular to the pellet axis. Each fuel pellet is made e.g. by sintering a powder of fissile material.

In some pellets, each end face comprises a central dishing surrounded by a rim, the rim being surrounded by a chamfer extending between the rim and the lateral face, preferably cylindrical, of the fuel pellet. The dishing, the rim and the chamfer are concentric and centered on the pellet axis.

A fuel pellet may exhibit defects affecting the end faces of the nuclear fuel pellet, namely surface losses and/or protrusions on the ends faces of the fuel pellet.

The expression "surface losses" refers to missing portion or indention on the fuel pellets. Surface losses may be generated by chipping the fuel pellets (e.g. caused by shocks) during handling on the manufacturing lines.

Protrusions may comprise blisters (raised dome-shaped protrusions protruding axially from the end face caused by trapped gases during sintering), lips (material protruding axially from the periphery of the end face, caused e.g. by contacts between pellets during sintering) and flashing (material protruding axially from the periphery of the end-face, caused e.g. by tooling problems during pressing (e.g. chipping of a press punch)).

Any defect of a fuel pellet may be detrimental to the nuclear fuel rod incorporating the fuel pellet and to the nuclear fuel assembly incorporating said fuel rod.

It is possible to inspect fuel pellets before insertion into a cladding of a nuclear fuel rod. To this end, fuel pellets are fed e.g. to an automated inspection system comprising a conveying system for conveying fuel pellets individually. Such conveying systems are known e.g. from EP2133290A1 and EP2273508A1.

In view of inspecting the end faces of a fuel pellet, the automated inspection system may be equipped with an image-capturing device (e.g. a matrix camera) arranged for capturing an image of an end face of a fuel pellet that is being conveyed on the conveying system and analyzing the captured images in an automated manner. The end faces of the fuel pellets can thus be inspected while the fuel pellets are being conveyed, e.g. for detecting the presence of a surface loss or a protrusion. The optical axis of the image-capturing device is for example coaxial with the pellet axis or makes a small angle with the pellet axis, e.g. an angle comprises between 0° and 30°.

However, inspecting the end faces of a fuel pellet, notably in the chamfer area or in the dishing area, with such an automated inspection system is difficult and thus not entirely reliable. Indeed, the chamfer and the dishing are recessed surfaces compared with the rim, with different orientations and then different illumination conditions. The surface(s) on which the fuel pellets are conveyed may also affect the illumination conditions of the end faces. A defect present on an end face may be clearly visible only at the rim location on a front image of the end face captured by the image-capturing device or may be difficult to detect. Reliable sorting of end face surface losses of nuclear fuel pellets in the chamfer area, usually also affecting the pellet edge, are particularly interesting to improve the fuel pellet-cladding interaction conditions in the nuclear reactor cores. In addition, it is sometimes difficult to differentiate a surface loss from a protrusion on a front image of the end-face. Hence, defect of nuclear fuel pellets may not be detected or correctly classified (surface loss or protrusion) and/or pellets without defect may be rebutted inappropriately.

One aim of the invention is to propose an inspection system for inspecting a nuclear fuel pellet, said inspection system being easy to operate while being efficient and reliable, in particular at high throughput (e.g. ten pellets per second).

To this end, the invention proposes an inspection system for inspecting a nuclear fuel pellet that is rotationally symmetrical about a pellet axis and has a lateral face and two end faces or a plurality of such nuclear fuel pellets arranged in a column, the inspection system comprising a supporting device for supporting the fuel pellet(s) such that the pellet axis of each fuel pellet coincides with a reference axis, and an optical measuring device arranged for optically measuring the fuel pellet(s), the optical measuring device comprising a light emitter configured for emitting a light beam propagating along an optical axis and a light detector arranged for receiving the light beam, wherein each fuel pellet interrupts the light beam and generates a shadow projected on the light detector, the optical measuring device comprising a measuring module configured for analyzing the shadow for detecting possible defects on the end faces and/or the lateral face of each fuel pellet.

A defect such as a surface loss on the end face of a fuel pellet will generally affect the periphery of said end face of the fuel pellet, notably because the periphery of the end face is more subject to shocks during pellet handling on the manufacturing lines.

A defect such as a protrusion on the end face of a fuel pellet will also generally affect the periphery of said end face of the fuel pellet, notably because the periphery of the press punches are more subject to chipping on their peripheral and circular edge and because the contact between pellets during sintering take place at the rim location.

In a fuel pellet comprising end faces, each having a central dishing surrounded by a rim and a chamfer, such defects will affect for example the rim and/or the chamfer of an end face.

A defect can thus impart an abnormal outline to the fuel pellet in side view and this can be detected using an optical measuring device configured for projecting a light beam one the side of the fuel pellet in a direction perpendicular to the pellet axis and measuring geometrical parameters of the shadow generated by the fuel pellet interrupting the light beam.

Optical measurement of the nuclear fuel pellet from the side can be performed while the nuclear fuel pellet is conveyed in a direction parallel to the pellet axis with a constant distance between the optical measuring device and the nuclear fuel pellet.

In specific embodiments, the inspection system comprises one or several of the following optional features, taken in isolation or in any technically feasible combination:
- the measuring module is configured for measuring at least one geometrical parameter of the shadow for detecting possible defects on the end faces and/or the lateral face of each fuel pellet;
- the measuring module is configured for measuring at least one distance of the shadow, at least one length of the shadow and/or at least one area of the shadow for detecting possible defects on the end faces and/or the lateral face of each fuel pellet;
- the optical axis defines with a plane perpendicular to the reference axis an angle that is comprised between 0° and 45°, preferably between 0° and 25°;
- the optical axis is substantially perpendicular to the reference axis;
- the supporting device is configured for rotating each fuel pellet(s) about its pellet axis;
- the measuring device is configured for analyzing the shadow during at least one full rotation of each fuel pellet, such as to analyze the entire circumference of each end face and/or the entire circumference of the lateral face of each fuel pellet;
- the supporting device comprises two cylindrical rollers parallel to each other, the rollers being configured for receiving the fuel pellet(s) positioned onto the two rollers with the pellet axis of each fuel pellet being parallel to the rollers;
- the two rollers are movable in rotation in the same direction such as to rotate the fuel pellet or the column of fuel pellets received on the two rollers about the pellet axis;
- the inspection system is configured for conveying the fuel pellet(s) axially along the reference axis;
- the inspection system comprises a pushing device comprising at least one pushing member that is movable relative to the supporting device such as to move the fuel pellet(s) along the reference axis;
- the supporting device is configured for conveying the fuel pellet(s) axially along the reference axis while rotating each fuel pellet about its pellet axis and the light beam extends in the direction of the reference axis over a length that is greater than the length of the fuel pellet(s) plus the length of travel of the fuel pellet(s) along the reference axis while the fuel pellet makes at least one full turn about its pellet axis;
- the light beam is linear and the shadow generated by each fuel pellet is in the shape of a segment, the measuring module being configured for measuring the length of the shadow generated by each fuel pellet for determining the corresponding length of the fuel pellet and the presence of defects on the end faces and/or the lateral face of the fuel pellet;
- the light beam is bi-dimensional and the shadow generated by each fuel pellet is bi-dimensional;
- the measuring module is configured for measuring at least one length of the shadow generated by each fuel pellet for determining a corresponding length of the fuel pellet taken between end faces of the fuel pellet;
- the measuring module is configured for analyzing the shadow generated by each fuel pellet with determining a position of a transverse plane of the fuel pellet and determining at least one axial distance between the transverse plane and a side of the contour of the shadow corresponding to an end face;
- the measuring module is configured to determine a position of a median transverse plane of the fuel pellet and to determine a length of the shadow generated by each fuel pellet between the median plane and said side of the contour of the shadow for determining the corresponding length of the fuel pellet;
- the measuring module is configured for analyzing the shadow generated by each fuel pellet with, for at least one end face or for each end face, determining the position of an end transverse plane of the end face, the end transverse plane being perpendicular to the fuel pellet axis, and calculating at least one axial distance between the end transverse plane and the side of the contour of the shadow corresponding to said end face;
- the end transverse plane is positioned to pass via a point of the side of the contour of the shadow corresponding to the end face or to be tangent to a line of the contour of the shadow corresponding to the end face;
- the measuring module is configured for calculating several axial distances at several discrete radial distances with respect to the fuel pellet axis and/or for calculating the distance between the end face and the end transverse plane over a measuring portion of the side of the contour corresponding to the end face;
- the measuring portion extends radially inwardly and/or radially outwardly to the outer edge of the end face from the intersection of the end transverse plane with the side of the contour corresponding to the end face;
- the measuring module is configured for determining a 3D map of at least a portion of at least one of the end faces of each fuel pellet from the analysis of the shadow generated by the fuel pellet(s);
- the measuring module is configured for generating a 3D image file corresponding to the 3D map and coding a 3D image representing the end face and/or for generating a 2D image file coding a 2D image corresponding to the 3D map;
- the measuring module is configured for detecting a surface loss of an end face of each fuel pellet and/or a protrusion on an end face of each fuel pellet and/or an end-capping between one of the end faces and the lateral face of each fuel pellet.

The invention also proposes a method of inspecting a nuclear fuel pellet that is rotationally symmetrical about a pellet axis using an inspection system as defined above.

The invention and its advantages will be better understood upon reading the following description that is given solely by way of non-limiting example and with reference to the appended drawings, on which:
- Figure 1 is a partial cross-sectional view of a nuclear fuel rod showing a fuel pellet;
- Figure 2 is a front view of an end face of the fuel pellet;
- Figure 3 is a diagrammatical front view of an inspection system comprising a conveyor for conveying the fuel pellet and an optical measuring device;
- Figure 4 is a diagrammatical side view of the conveyor;
- Figure 5 is a diagrammatical perspective view of the conveyor and the optical measuring device;
- Figure 6 illustrates a shadow generated by the fuel pellet conveyed by the conveyor in the optical measuring device and geometrical measurements performed on this shadow;
- Figure 7 illustrates a shadow generated by the fuel pellet conveyed by the conveyor in the optical measuring device and geometrical measurements performed on this shadow;
- Figure 8 illustrates a shadow generated by the fuel pellet conveyed by the conveyor in the optical measuring device and geometrical measurements performed on this shadow;
- Figure 9 illustrates a shadow generated by a fuel pellet conveyed by the conveyor in the optical measuring device and geometrical measurements performed on this shadow;
- Figure 10 is a diagrammatical perspective view of a conveyor and another optical measuring device;
- Figure 11 is a front view of the fuel pellet illustrating the position of a light beam generated by the optical measuring device of Figure 10 relative to the fuel pellet;
- Figure 12 is a perspective view of a pellet having an end face that has defects (here surface losses);
- Figure 13 - 15 are graphs illustrating curves indicating distances measured on the pellet of Figure 12 as function of a rotation angle of the pellet;
- Figure 16 is illustrates shadows generated by fuel pellets arranged in a column and conveyed by the conveyor in the optical measuring device and geometrical measurements performed on the shadows of some of the fuel pellets;
- Figure 17 illustrates a shadow generated by a fuel pellet having an end capping defect.

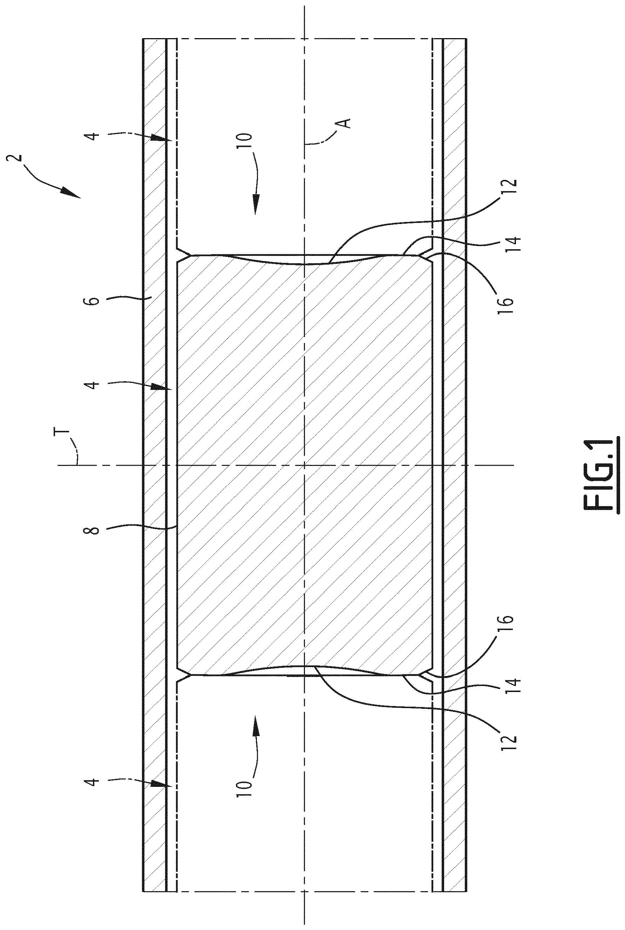

The nuclear fuel rod 2 illustrated on Figure 1 comprises a stack of nuclear fuel pellets 4 (hereinafter "fuel pellets") encased in a tubular cladding 6. Each fuel pellet 4 is made of a fissile material, e.g. enriched uranium dioxide.

In Figure 1, one fuel pellet 4 is illustrated in cross-section and the outlines of other fuel pellets 4 are illustrated in dash-dotted lines.

Each fuel pellet 4 is rotationally symmetrical about a pellet axis A. Each fuel pellet 4 has a lateral face 8 and two end faces 10. The lateral face 8 is preferably cylindrical about the pellet axis A.

The two end faces 10 are preferably symmetrical relative to a median plane T of the fuel pellet 4. The median plane T is perpendicular to the pellet axis A.

Each end face 10 has for example a central dish 12, a rim 14 and a peripheral chamfer 16. The dish 12, the rim 14 and the peripheral chamfer 16 are concentric. The rim 14 is annular and surrounds the dish 12. The chamfer 16 is annular and surrounds the rim 14.

The dish 12 is for example in the shape of a concave hemispherical surface. The dish 12 of each end face 10 defines a central depression on said end face 10, said depression being surrounded by the rim 14. The dish 12 of each end face 10 is not visible in a side view of the fuel pellet 4 because it is hidden by a sector of the rim 14.

The rim 14 of each end face 10 is for example of conical shape centered on the pellet axis or extends in a plan perpendicular to the pellet axis A. The rim 14 is e.g. only very slightly conical. The angle between the rim 14 and a plan perpendicular to the pellet axis A is e.g. comprises between 0° and 5°.

The chamfer 16 is of conical shape centered on the pellet axis A. The chamfer 16 is inclined with respect to the rim 14 and with respect to the lateral face 8. The chamfer 16 defines extends between the lateral face 8 and the rim 14. The chamfer 16 is visible on a side view of the fuel pellet 4.

The angle between the chamfer 16 and a plan perpendicular to the pellet axis A is strictly greater than the angle between the rim 14 and this plan perpendicular to the pellet axis A.

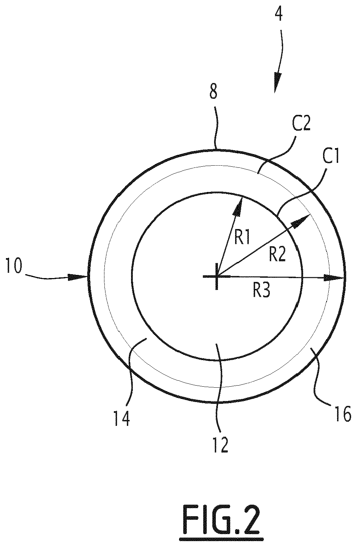

As illustrated on Figure 2 that illustrates a front view of the fuel pellet 4, the end face 10 exhibits a first circle C1 at the transition of the central dish 12 and the rim 14 and a second circle C2 at the transition between the rim 14 and the chamfer 16. The dish 12 is located inside the first circle C1. The rim 14 is located between the first circle C1 and the second circle C2 and the chamfer 16 is located outside the second circle C2.

The dish 12 has an external radius equal to a first radius R1 (radius of the first circle C1), the rim 14 has an internal radius equal to the first radius R1 and an external radius equal to a second radius R2 (radius of the second circle C2) and the chamfer 16 has an internal radius equal to the second radius R2 and an external radius equal to a third radius R3.

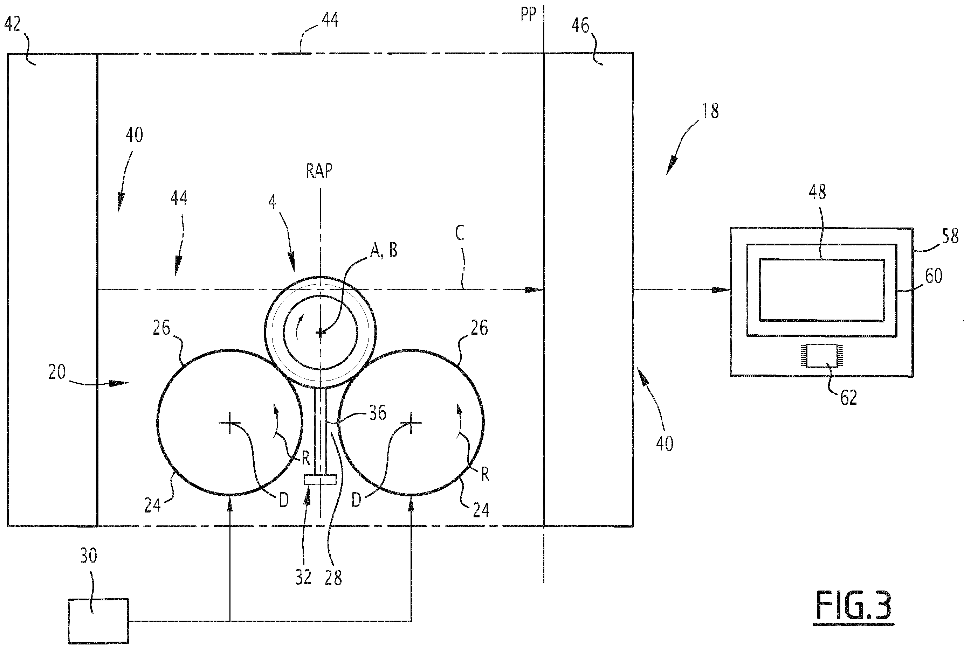

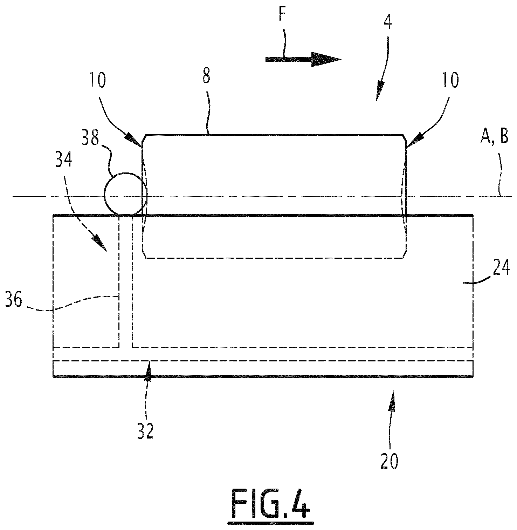

The inspection system 18 of Figures 3 and 4 is configured for automated inspection of the fuel pellet 4.

The inspection system 18 comprises a supporting device 20 configured for receiving the fuel pellet 4 with the pellet axis A coinciding with a reference axis B. The reference axis B is perpendicular to the plane of Figure 3.

The supporting device 20 is configured such that in view along an optical axis C, at least portion of the fuel pellet 4 is visible without obstruction of the supporting device 20. A portion of the fuel pellet 4 may be hidden by the supporting device 20 in view along the optical axis C.

The supporting device 20 comprises for example two cylindrical rollers 24 arranged parallel one to the other. Each roller 24 extends along a respective roller axis D. The rollers axes D are parallel. Each roller axis D is parallel to the reference axis B. The roller axes D are preferably substantially horizontal.

Each roller 24 has a cylindrical outer surface 26. The two rollers 24 preferably have the same outer diameter. The rollers 24 are spaced such that the rollers 24 are not in contact with each other. The two rollers 24 define a gap 28 between them.

The two rollers 24 are spaced and configured such that a fuel pellet 4 supported by the two rollers 24 has a top portion that is visible above the two rollers 24 in a side view perpendicularly to the reference axis B (Figure 4).

Optionally, the supporting device 20 comprises a driving device 30 configured for driving the rollers 24 in rotation about their respective rollers axes D in the same angular direction as illustrated by arrows R on Figures 3, 5 and 10. This allows driving the fuel pellet 4 supported onto the rollers 24 in rotation about its pellet axis A in the opposite angular direction.

Optionally, the supporting device 20 comprises a moving device 32 (Figure 4) configured for moving the fuel pellet 4 axially along the rollers 24 is a moving direction (towards the right on Figure 4 as illustrated by arrow F).

The moving device 32 comprises for example a pushing member 34 that is driven in translation along the rollers 24, the pushing member 34 comprising a stem 36 extending through the gap 28 defined between the rollers 24 and having a pushing head 38 arranged to contact an end face 10 of the fuel pellet 4 for pushing the fuel pellet 4 axially along the roller 24.

In the illustrated example, the pushing member 34 is preferably arranged such that the pushing head 38 contacts the center of the dish 12 of said end face 10 when the pellet 4 is supported by the rollers 24.

The moving device 32 may comprises several pushing members 34 driven by a conveyor (not shown) for moving simultaneously several pellets 4 along the rollers 24, as disclosed in EP2273508A1.

The inspection system 18 comprises an optical measuring device 40 (Figure 3) arranged for measuring geometrical parameters of the fuel pellet 4 supported by the supporting device 20.

The optical measuring device 40 comprises a light emitter 42 configured for emitting a light beam 44 along the optical axis C and a light detector 46 configured for receiving the light beam 44.

Preferably, the optical axis C is perpendicular to the reference axis B.

The light beam 44 is preferably a parallel light beam. The light rays of the light beam 44 are parallel to each other and to the optical axis C.

The light emitter 42 and the light detector 46 are arranged on either sides of the supporting device 20 such that the pellet 4 supported by the supporting device 20 is located between the light emitter 42 and the light detector 46. The pellet 4 supported by the supporting device 20 intercepts part of the light beam 44.

When the pellet 4 intercepts the light beam 44, the pellet 44 generates on the side of the light detector 46 a shadow corresponding to the outline of the pellet 4 in view along the optical axis C.

The light detector 46 is configured for detecting the portion of the beam that has not been intercepted by the fuel pellet 4 and the portion of the light beam 44 that has been intercepted by the fuel pellet 4, i.e. the shadow generated by the pellet 4.

Such an optical measuring device is sometimes names a "thrubeam" or "throughbeam" optical measuring device as it comprises a light emitter 42 for emitting a light beam 44 towards a light detector 46, the object to be measured being placed in the light beam 44.

The light emitter 42 and the light detector 46 are preferably configured such that the light beam 44 has an extension along the reference axis B that is greater than the expected overall length of the pellet 4 along the pellet axis A. Hence, the pellet 4 can intercept the light beam 44 over the whole length of the pellet 4.

As it is explained below, the fuel pellet 4 may be rotated and moved axially during the measurements, in which case the extend of the light beam 44 is preferably greater than the length of the fuel pellet 4 plus the axial distance travelled by the fuel pellet 4 along the supporting device 20 during at least one full rotation of the fuel pellet 4 about the pellet axis A.

The optical measuring device 40 comprises a measuring module 48 that is configured for detecting defects on end faces 10 of the fuel pellet 4 by analyzing the shadow generated by (or projected by) the fuel pellet 4 on the light detector 46, in particular by measuring geometrical parameters of the shadow generated by (or projected by) the fuel pellet 4 on the light detector 46.

More specifically, the light detector 46 is configured for generating an image file including a representation of representing the shadow detected by the light detector 46 and the measuring module 48 is configured for processing the image file to analyze the shadow, in particular by measuring geometrical parameters of the shadow.

The measuring module 48 is configured for example for measuring at least one axial distance on the shadow (taken along the pellet axis A), at least one length of the shadow (taken along the pellet axis A) and/or at least one area of the shadow as it will be exemplified hereinafter.

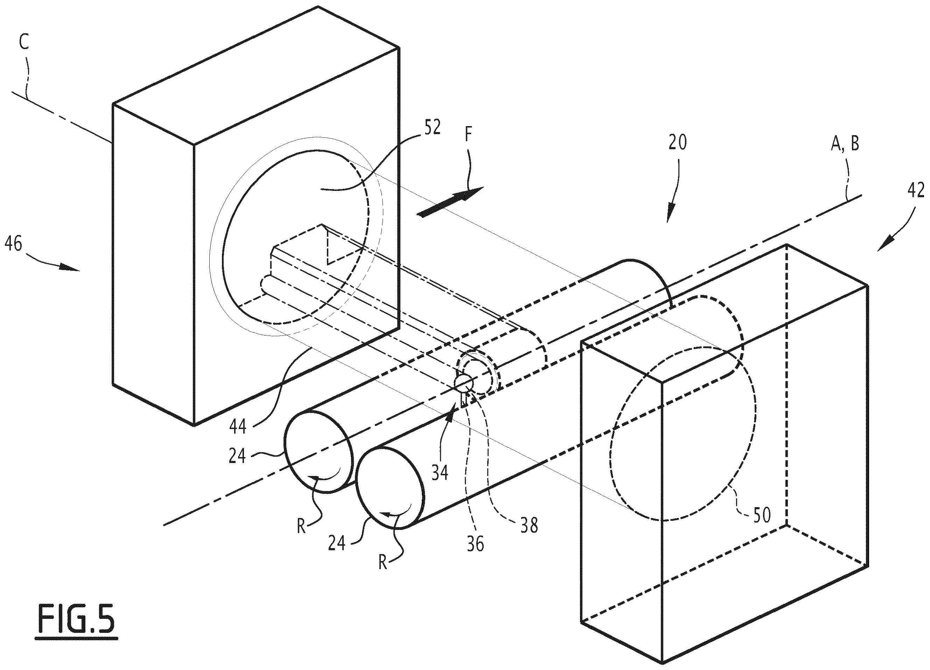

In the embodiment illustrated on Figure 5, the light emitter 42 is configured for emitting a light beam 44 that exhibits a two-dimensional shape in cross-section, i.e. in a plane perpendicular to the optical axis C.

The light emitter 42 has a light emitting surface 50 having the shape of the cross-section of light beam 44. The light detector 46 has a light sensitive surface 52 having the shape of the light beam 44. The light sensitive surface 52 extends in a projection plan PP.

Such an optical measuring device is named an "area optical micrometer" or "2D optical micrometer" or a "profilometer". The light emitter 42 and the light detector 44 are named an area light emitter 42 and an area light detector 44.

The two-dimensional shape of the light beam 44 is e.g. a circular shape. Other shapes may be contemplated, such as a rectangular shape.

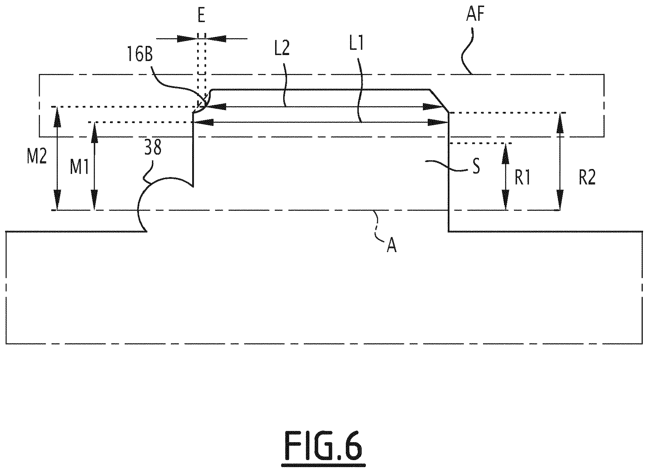

As illustrated on Figure 6, the light beam 44 projects a two-dimensional shadow of the illuminated portion of the pellet 4 onto the light detector 46, more specifically on the light sensitive surface 52 of the light detector 46. The contour of shadow corresponds to the outline of the portion of the pellet 4 supported by the supporting device 20 that is illuminated by the light beam 44.

In the illustrated example, the shadow corresponds to the outline of the upper portion of the fuel pellet 4 that extends above the rollers 24, the lower portion of the pellet 4 being in the shadow of the rollers 24.

The fuel pellet 4 supported by the supporting device 20 is considered to have the pellet axis A coinciding with the reference axis B and upon measuring geometrical parameters of the shadow, the position of the pellet axis A is considered to be known.

As illustrated on Figures 6 - 8, the measuring module 48 is for example configured for determining at least one length the fuel pellet 4 taken along the pellet axis A by measuring a corresponding length of the shadow of the fuel pellet 4 projected on the light detector 46.

The measuring module 48 is configured in particular for measuring the length of the shadow along the pellet axis A between two sides of the contour of the shadow generated by the end faces 10 of the fuel pellet 4.

As illustrated more particularly on Figure 6, the measuring module 48 is for example configured for measuring the length L1 of the shadow of the fuel pellet 4 along the pellet axis A at a distance M1 from the pellet axis A that is equal or superior to the internal radius of the rim 14 (first radius R1) and equal or inferior to the external diameter of the rim 14 (second radius R2).

At such a radial distance M1 from the pellet axis A, the length L1 of the shadow that is projected onto the light detector 46 corresponds to the distance between two axially aligned rim portions of the end faces 10 of the fuel pellet 4 which are located in a reference axial plane RAP that contains the pellet axis A and is perpendicular to the optical axis C.

The length L1 of the shadow measured at this radial distance M1 thus correspond to a rim-to-rim length of the fuel pellet 4 at a particular angular position around the pellet axis A, more specifically at the position in the reference axial plane RAP.

At a distance from the pellet axis A inferior to the internal radius of the rim 14 (first radius R1), the shadow is ambiguous as each side of the shadow may correspond to two circumferentially spaced angular portions of the same rim 14. A defect such as a surface loss affecting only one of these two portions would thus be hidden by the other portion on the profile projected on the light detector 46 and would not be detected.

The measuring module 48 is for example configured for measuring the length L2 of the profile of the pellet 4 along the pellet axis A at a radial distance M2 from the pellet axis A that is equal or superior to the internal diameter of the chamfer 16 (second radius R2) and equal or inferior to the external diameter of the chamfer 16 (third radius R3).

At such a radial distance M2 from the pellet axis A, the length of the shadow that is projected onto the light detector 46 corresponds to the distance between two axially aligned portions of the chamfers 16 of the end faces 10 of the fuel pellet 4 which are located in the reference axial plane RAP.

The length of the shadow measured at this radial distance M2 thus corresponds to the chamfer-to-chamfer distance of the fuel pellet 4 at a particular angular position around the pellet axis A, more specifically at the angular position that is in the reference axial plane RAP.

At a distance from the pellet axis A inferior to the internal radius of the chamfer 16 (second radius R2), the length of the profile corresponds to the length of the pellet 4 taken between the rims 14 of the end faces 10.

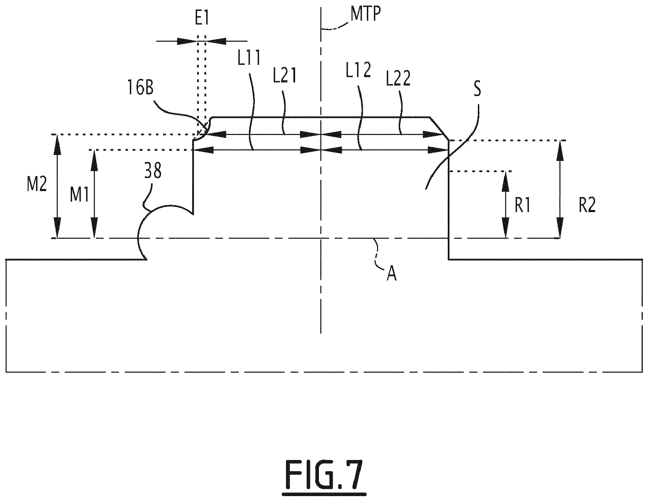

As illustrated on Figure 7, alternatively or optionally, the measuring module 48 is configured for determining the position of a median transverse plane MTP of the fuel pellet 4 in the shadow generated by the fuel pellet 4 and for measuring at least one length of the shadow taken between the median transverse plane MTP and a side of the contour of the shadow corresponding to an end face 10 of the fuel pellet 4 to determine a length of the fuel pellet 4.

The contour of shadow of the fuel pellet 4 comprises two sides corresponding to the profiles of the end faces 10 of the illuminated portion of the fuel pellet 4 in side view along the optical axis C.

In one example, the measuring module 48 determines the position of the median transverse plane MTP as a function of portions of the two sides of the shadow corresponding to the end faces 10 of the fuel pellet 4.

In one example in which each end face 10 of the fuel pellet 4 has a dish 12, a rim 14 and a chamfer 16, each side of the contour of the shadow exhibits a dish portion extending between the pellet axis A and the first radius R1 in which the dish 12 is in the shadow of the rim 14, a rim portion extending between the first radius R1 and the second radius R2 corresponding to the profile of the rim 14 and a chamfer portion extending between the second radius R2 and the third radius R3 corresponding to the profile of the chamfer 16.

The dish portions of the sides are parallel. The rim portions of the end face lines are not parallel if the rim 14 is conical or parallel if the rim 14 is planar. The chamfer portions of the end face lines are not parallel due to the conicity of the chamfers 16 of the end faces 10.

In one example, the measuring module 48 determines the position of the median plane MTP in the shadow as being located between two parallel portions of the sides of the contour of shadow corresponding to end faces 10 of the fuel pellet 4.

As illustrated on Figure 7, the pushing member 38 also projects a shadow onto the light detector 46, but the dish portion of the adjacent side of the contour of the shadow can still be detected by the measuring module 48.

The measuring module 48 is for example configured for measuring the length L11, L12 of the shadow of the fuel pellet 4 along the pellet axis A taken between the median transverse plane MTP and each side of the shadow at a radial distance M1 from the pellet axis A that is equal or superior to the internal radius of the rim 14 (first radius R1) and equal or inferior to the external diameter of the rim 14 (second radius R2).

The lengths L11, L12 of the shadow measured at this distance M1 thus correspond to the rim-to-median transverse plane lengths of the fuel pellet 4 at a particular angular position around the pellet axis A, more specifically at the position in the reference axial plane RAP.

The measuring module 48 is for example configured for measuring the lengths L21, L22 of the shadow of the pellet 4 along the pellet axis A taken between the median transverse plane T and each sides of the shadow at a radial distance M2 from the pellet axis A that is equal or superior to the internal diameter of the chamfer 16 (second radius R2) and equal or inferior to the external diameter of the chamfer 16 (third radius R3).

These lengths L21, L22 of the shadow correspond to the chamfer-to-median transverse plane lengths of the fuel pellet 4 at a particular angular position around the pellet axis A, more specifically at the visible angular position that is in the reference axial plane RAP.

Measuring a length of the shadow from the median transverse plane MTP to portions of the sides of the shadow allows distinguishing respective defects of the end faces 10. The position of the median transverse plane MTP is used as a reference. When determining a length between two portions of the end faces 10, the length that is obtained is relative and this would not allow to properly classify defects in certain circumstances, e.g. when a portion of one of the end faces 10 has a surface loss and the corresponding portion of the other end face 10 has a protrusion.

As illustrated on Figures 6 or 7, a defect surface loss 16B affecting the chamfer 16 of an end face 10 of the pellet 4 may be automatically detected as a chamfer-to-chamfer length or a chamfer-to-median transverse plane length measured by the measurement module 48 that is slightly shorter than the expected chamfer-to-chamfer length or the expected chamfer-to-median transverse plane length, with e.g. a difference E or E1 with the expected length.

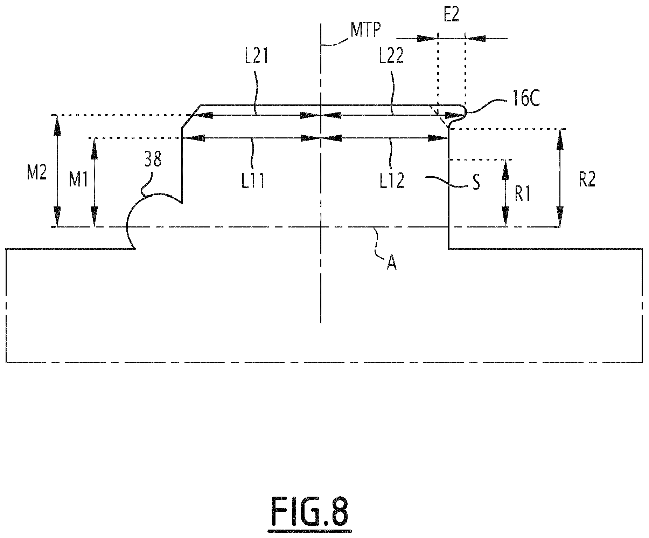

As illustrated on Figure 8, a defect protrusion 16C affecting the chamfer 16 of an end face 10 of the pellet 4 may be automatically detected as a chamfer-to-chamfer length or a chamfer-to-median transverse plane length L21 measured by the optical measurement module 48 that is slightly longer than the expected chamfer-to-chamfer length or the expected chamfer-to-median transverse plane length, with e.g. a difference E2 with the expected length.

The skilled man understands that if the defect also affects the rim of an end face 10 located in the reference axial plane RAP, the defect will appear in the same manner as a rim-to-rim length or rim-to-median transverse plane shorter or longer than the expected rim-to-rim length or rim-to-median transverse plane length.

Optionally or alternatively, the measuring module 48 is configured to measure an area of the shadow generated by the illuminated portion of the fuel pellet 4.

The measuring module 48 is for example configured for measuring the area of the shadow taken between the two sides of the contour of shadow corresponding to the end faces 10 of the fuel pellet 4.

Optionally or alternatively, the measuring module 48 is configured for measuring the area of the shadow between the median transverse plane MTP and each sides of the contour of the shadow corresponding to an end face 10 of the fuel pellet 4. The measuring module 48 thus calculates the two end-face-to-median transverse plane areas of the shadow.

A defect (surface loss or protrusion) affecting a peripheral portion of an end face 10 located in the reference axial plane RAP will alter the shadow generated by the fuel pellet 4 which will exhibit an area lower than expected (surface loss) or greater than expected (protrusion).

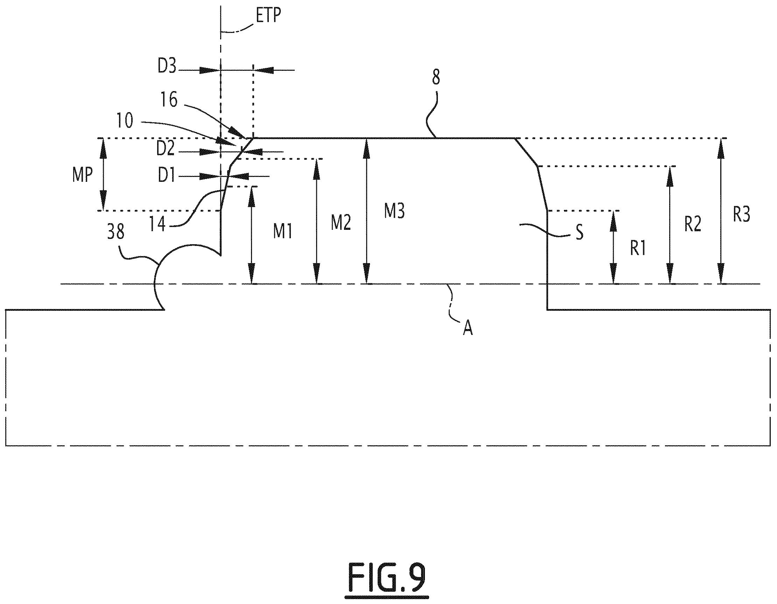

As illustrated on Figure 9, alternatively or optionally, the measuring module 48 is configured for analyzing the shadow generated by the fuel pellet 4 with determining, for at least one of the end faces 10, at least one axial distance D1, D2, D3 (taken along the fuel pellet axis A) between an end transverse plane ETP associated to this end face 10 and the side of the contour of the shadow corresponding to the end face 10.

The end transverse plane ETP is e.g. a plane that is perpendicular to the fuel pellet axis A and that is positioned along the fuel pellet axis A to include a point or an edge of the end face 10.

The measuring module 48 is for example configured to position the end transverse plane ETP relative to the shadow such that the end transverse plane ETP is tangent or intersects the side of the contour of the shadow corresponding to the end face 10 at a specific radial distance from the fuel pellet axis A.

The specific radial distance is chosen e.g. such that the end transverse plane ETP is tangent or intersects the side of the contour of the shadow at the point of the rim portion corresponding to the inner edge of the rim 14, an intermediate point of the rim portion located between the inner edge of the rim 14 and the outer edge of the rim 14, at the point of the rim portion corresponding to the outer edge of the rim 14, at a point of the chamfer portion, at the point of the chamfer portion corresponding to the outer edge of the end face 10 or at the dish portion.

In a preferred embodiment, as illustrated on Figure 9, the end transverse plane ETP is tangent to a point of the rim portion corresponding to the inner edge of the rim 14 or a point of the projection of the dish portion of the side of the contour of the shadow.

In the absence of a defect, as illustrated on Figure 9, the point of the rim portion corresponding to the inner edge of the rim 14 and the dish portion determine the same end transverse plane ETP.

The use of this end transverse plane ETP is advantageous because a defect such as a protrusion shall not cross this end transverse plane ETP. Otherwise, a gap may be created with an adjacent pellet in a pellet column in a nuclear fuel rod, which would be detrimental to the operation of the fuel rod.

Besides, in case of significant protrusion or surface losses, the location of the end transverse plane ETP can be unstable and then lead to false measurements (e.g. chaotic measurements of axial distances D1, D2 and D3). The closer the point used to construct the end transverse plane ETP is to the axis of the pellet, the greater the likelihood that the end transverse plane ETP will be stable.

Each axial distance D1, D2 and D3 is determined as a distance taken along the fuel pellet axis A, measured between the end transverse plane ETP and the side of the contour of the shadow corresponding to the end face 10 at a respective radial distance M1, M3, M3 from the fuel pellet axis A.

The measuring module 48 is configured for example for determining a plurality of axial distances D1, D2, D3 taken at discrete radial distances M1, M2, M3.

The measuring module 48 is configured for example for determining a first axial distance D1 at a first radial distance M1, a second axial distance D2 at a second radial distance M2 and/or a third axial distance D3 at a third radial distance M3.

For example, the first radial distance M1 is chosen to correspond to the rim 14, the second radial distance M2 is chosen to correspond to the chamfer 16 and the third radial distance M3 is chosen to correspond to outer edge of end face 10, i.e. in this example the junction between the chamfer 16 and the side face 8 of the fuel pellet 4. The third radial distance M3 is here equal to the third radius R3.

The end faces 10 of the pellet 4 illustrated on Figure 9 have slightly conical rims 14. This enables to illustrate an example with a non-zero first axial distance D1. In another example, the rims 14 may be radial, i.e. each rim 14 extends in a plan perpendicular to the pellet axis A, whereby the first axial distance D1 is supposed to be approximately zero.

In an alternative embodiment, the measuring module 48 is configured for measuring the axial distance relative to the end transverse plane ETP on the entire length of a measuring portion MP of the side of the contour of the shadow corresponding to the end face 10, said measuring portion MP being located between two radial distances with respect to the fuel pellet axis A, e.g. as illustrated here between the first radial distance M1 and the third radial distance M3.

Using a median transverse plane MTP and/or an end transverse plane ETP as a reference for calculating distances, lengths and/or areas allows better classification of the defects, e.g. is cases in which one of the side face has a surface loss while the other has a protrusion.

Optionally, the measuring module 48 is configured for implementing a check of the validity of end transverse plane ETP by measuring the overall length of the fuel pellet 4 at the lowest point of the field of view (i.e. at the closest distance from the fuel pellet axis A at which the contour of the fuel pellet 4 is projected without perturbation or masking from the supporting device 20 and/or the moving device 32).

In one exemplary embodiment, the measuring module 48 is configured such that if a deviation of the overall length of the fuel pellet 4 at the inner edge of the rim 14 or in the dish 12 is detected then the measures are not trusted and the fuel pellet 4 is rejected. Indeed, such a deviation may be due to the presence of a big defect (surface loss or protrusion) in the rim or the dishing area.

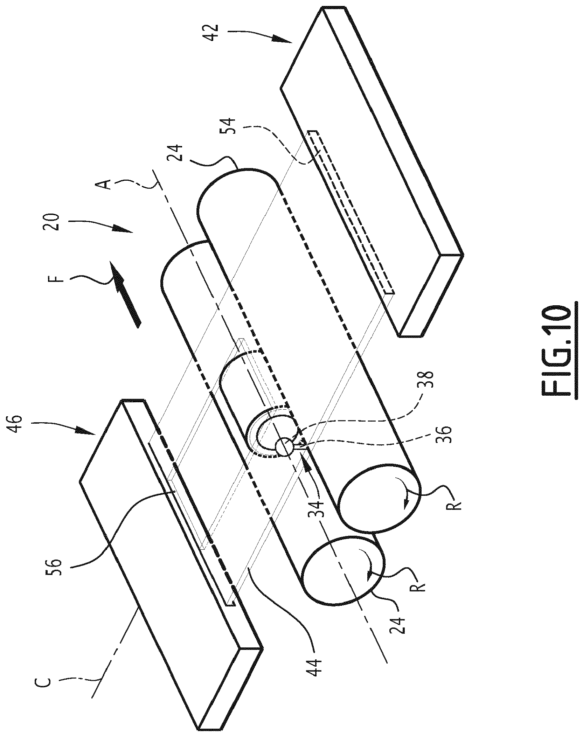

In the embodiment illustrated on Figure 10, the light emitter 42 is configured for emitting a light beam 44 that exhibits a one-dimensional shape in cross-section, i.e. in a plane perpendicular to the optical axis C.

The light beam 44 exhibits preferably the shape of a rectilinear segment in cross-section. The rectilinear segment extends parallel to the pellet axis A of the fuel pellet 4 supported on the support device 20.

The light emitter 42 has a light emitting line 54 having the shape of the light beam 44. The light detector 46 has a light sensitive line 56 having the shape of the light beam 44.

Such an optical measuring device 40 is named a "linear optical micrometer". The light emitter 42 and the light detector 44 are named a linear light emitter 42 and a linear light detector 44.

An optical measuring device 40 that may be used is the Micro-Epsilon optoCONTROL 2520 or the Keyence Series LS-9000.

The light beam 44 is emitted onto a portion of the pellet 4, whereby the length of light beam 44 intercepted by the pellet 4, the length of the shadow generated by or projected by the fuel pellet 4 on the light detector 46, corresponds to the apparent length of this illuminated portion of the pellet 4.

The measuring module 48 is configured for measuring the length of the illuminated portion of the fuel pellet 4 as a function of the light detected by the light detector 46, and in particular as a function of the length of the portion of the light beam 44 that has been intercepted by the fuel pellet 4.

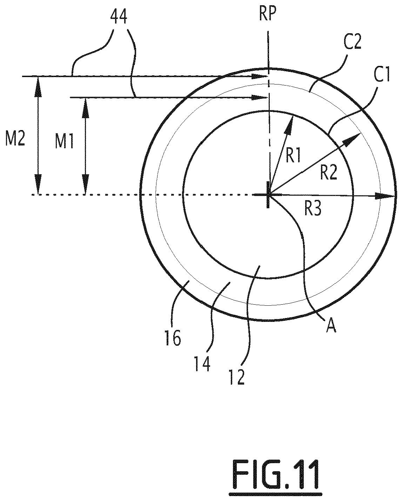

As illustrated on Figure 11, the light beam 44 intersects the reference plane RP at a radial distance M1 or M2 from the pellet axis A.

The light beam 44 is emitted onto the pellet 4 supported by the support device 20 for example at a radial distance M1 from the pellet axis A that is equal or superior to the internal radius of the rim 16 (first radius R1) and equal or inferior to the external diameter of the rim 14 (second radius R2).

At such a radial distance M1 from the pellet axis A, the length of the light beam 44 that is intercepted corresponds to the distance between the two axially aligned rim portions of the end faces 10 of the pellet 4 which are located substantially in the reference axial plane RAP, i.e. to the rim-to-rim length of the fuel pellet 4 at the angular position located in the reference axial plane RAP.

It is thus possible to detect a surface loss affecting these rim portions. A length inferior to the expected length indicates that a surface loss affects one or both these rim portions. It is also possible to detect a protrusion affecting these rim portions. A length superior to the expected length indicates that a protrusion affects one or both these rim portions.

If the light beam 44 is emitted at a distance from the pellet axis A that is inferior to the internal diameter of the rims 14 (first radius R1), the intercepted length of the light beam 44 may correspond on each end face 10 to two circumferentially spaced rim portions such that a defect on one of these two rim portions may be hidden by the other rim portion.

Alternatively, the light beam 44 is emitted at a radial distance M2 from the pellet axis A that is equal or superior to the internal diameter of the chamfer 16 (second radius R2) and equal or inferior to the external diameter of the chamfer 16 (third radius R3).

At such a radial distance M2 from the pellet axis A, the length of the light beam 44 that is intercepted corresponds to the distance between the two axially aligned chamfer portions of the end faces 10 of the pellet 4 which are located substantially in the reference axial plane RAP, i.e. to the chamfer-to-chamfer length of the fuel pellet 4 at the angular position located in the reference axial plane RAP.

It is thus possible to detect a surface loss affecting these chamfer portions. A length inferior to the expected length indicates that a surface loss affects one or both these chamfer portions. It is also possible to detect a protrusion affecting these chamfer portions. A length superior to the expected length indicates that a protrusion affects one or both these chamfer portions.

The optical measuring device 40 allows measuring the distance between the two axially aligned chamfer portions of the end faces 10 and/or the distance between two axially aligned rim portions of the end faces 10 located in the reference plane RP.

The measurement of geometrical parameters of the shadow generated by or projected by the fuel pellet 4 on the light detector 46 and performed by the measuring module 48 have been described above for one angular position of the fuel pellet 4.

Optionally, the supporting device 20 is configured for rotating the pellet 4 about the pellet axis A while measuring the shadow generated by the fuel pellet 4 with the optical measuring device 40, such as to allow determining the corresponding geometrical parameters of the fuel pellet 4 (e.g. rim-to-rim length, chamfer-to-chamfer length, rim-to-median transverse plan length, chamfer-to-median transverse plan length, shadow area, median transverse plane-to-end face area, end face-to-reference end plane distance) for a plurality of angular position of the fuel pellet 4 around the fuel pellet axis, i.e. at a plurality of positions along the circumference of the end face 10, preferably along the entire circumference of the end-face 10.

To this end, a drive device 30 drives the rollers 24 in rotation in the same angular direction (see arrows R on Figure 3) such as to drive the fuel pellet 4 in rotation about the pellet axis A, while the optical measuring device 40 performs measurements of rim-to-rim length, measurements of rim-to-median transverse plan lengths, measurements of the chamfer-to-chamfer lengths, measurements of chamfer-to-median transverse plan lengths and/or measurements end transverse plane-to-end face distances for the entire circumference of the fuel pellet 4.

Performing the measure(s) over the circumference of the end faces 10 of the fuel pellet 4 may help to automatically detect defects on the end faces 10 and/or discriminate different shapes surfaces losses or protrusions.

When the measures are performed for each of a plurality of angular position of the fuel pellet 4 around the fuel pellet axis A, where applicable, a median transverse plane MTP and/or an end transverse plane ETP are respectively determined for each angular position of the fuel pellet 4, for calculating associated distances, lengths and/or areas.

The angular positions may be discrete.

In one example, the number of angular position at which the measurements are operated is equal or superior to 360, in particular 390. This allow performing measurements for angular positions with an angular pitch of 1° or less between two following angular positions.

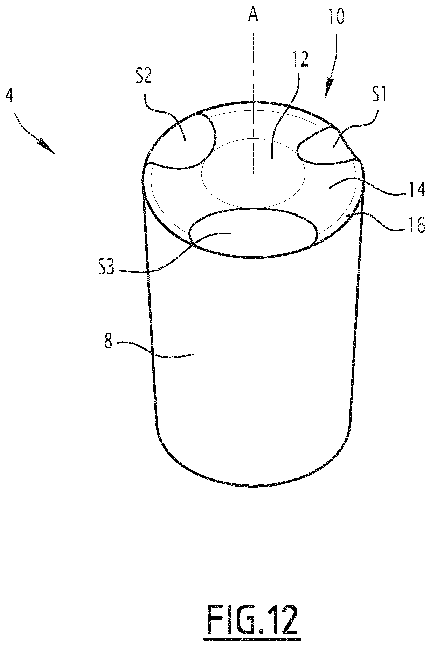

Figure 12 is a perspective view if a fuel pellet 4 having three surface losses S1, S2, S3 distributed on the circumference of an end face 10 of the fuel pellet 4. The three surface losses S1, S2, S3 exhibit different shapes.

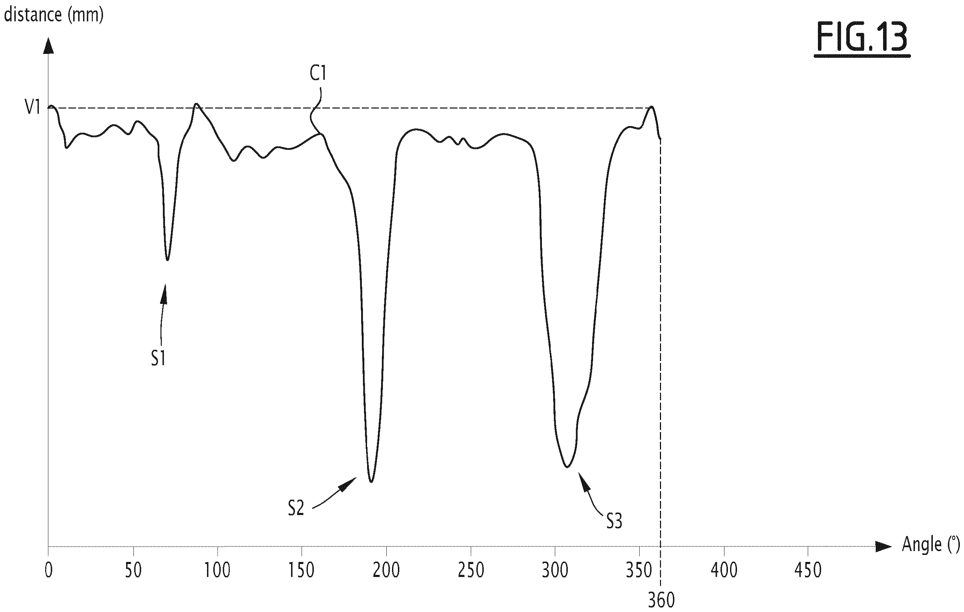

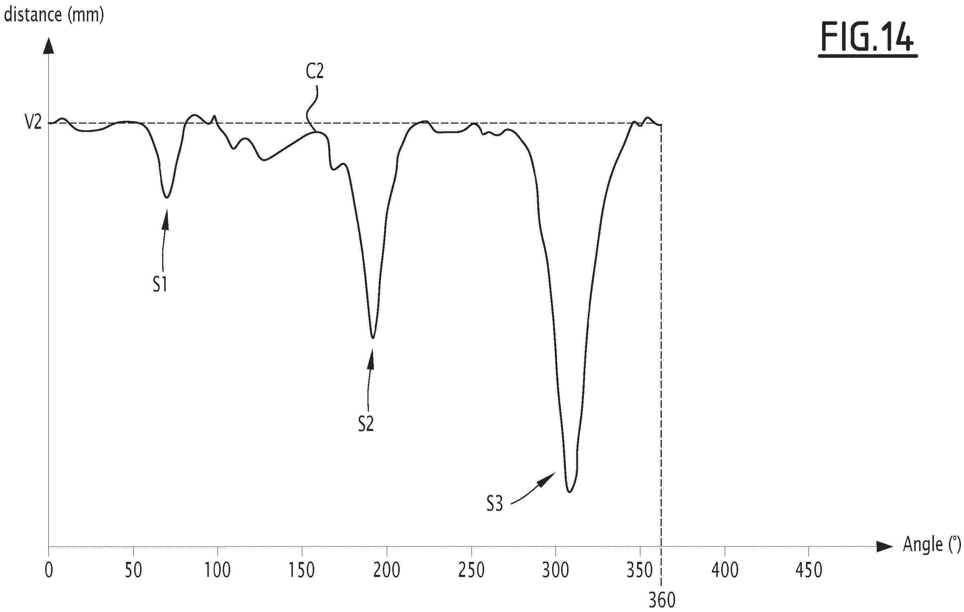

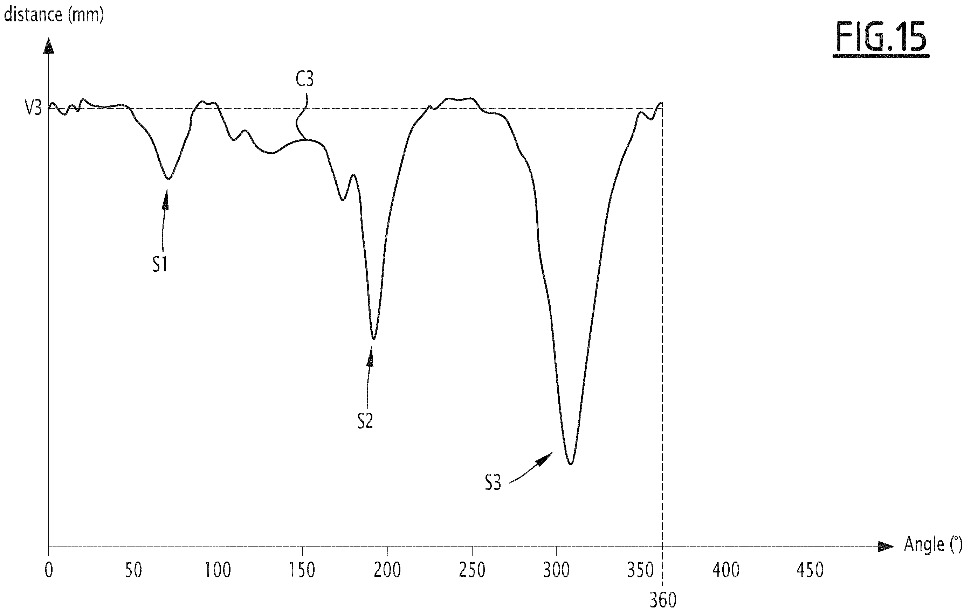

Figures 13 - 15 are graphs illustrating the axial distances D1, D2, D3 measured for the different radial distances M1, M2, M3 as a function of the angular position of the fuel pellet 4 about the fuel pellet axis A, measured as discussed in reference to Figure 9.

Each graph illustrates a curve C1, C2, C3 of the measure of a respective axial distance D1, D2, D3 (ordinate) as a function of the angular position of the fuel pellet 4 (abscissa).

In the illustrated example, each curve C1, C2, C3 extends mainly proximate to an expected value V1, V2, V3 with comprising three valleys at which the curve C1, C2, C3 moves away from the expected value V1, V2, V3, each valley corresponding to one of the three surface losses S1, S2, S3.

As illustrated here, the valleys extend here downwardly relative to the expected values V1, V2, V3 and correspond to the surface losses S1, S2, S2. A defect such as a protrusion would generate a peak extending upwardly relative to the expected value V1, V2, V3.

In one example, the measuring module 48 is configured for establishing for each radial distance M1, M2, M3 the corresponding curve C1, C2, C3 of the measure of a respective axial distance D1, D2, D3 as a function of the angular position of the fuel pellet 4.

For example, the measuring module 48 is configured for detecting peaks and/or valleys and for identifying a defect when the difference between a peak value or a valley value and an expected value V1, V2, V3 is higher that a detection threshold. Overpassing a threshold is indicative that the variation is beyond fabrication tolerances and is a defect of the fuel pellet 4.

Advantageously, the measuring module 48 is configured for classifying the defect by analyzing each curve C1, C2, C3.

In one example, the measuring module 48 is configured for measuring the width of each valley, the sum of the widths of all the valleys, the depth of each valley, the width of each peak, the sum of the widths of all the peaks and/or the height of each peak for classifying each defect that is detected. The width of a valley or the width of a peak correspond to the angular extend of the defect.

Advantageously, the measuring module 48 is configured for classifying the defect as a function of the measure of the width of each valley, the sum of the widths of all the valleys, the depth of each valley, the width of each peak, the sum of the widths of all the peaks and/or the height each peak.

For a surface loss, the width of the valley is generally of greater importance (with regard to pellet quality) than the depth of the valley.

In one example, the measuring module 48 is configured for classifying a defect characterized by a valley having a width greater than its height as a surface loss.

For a protrusion, the height of the peak is generally of greater importance (with regard to pellet quality) than the width of the valley.

In one example, the measuring module 48 is configured for classifying a defect characterized by a peak having a height greater than its height as a protrusion.

Besides, performing the measure of the axial distance all along a measuring portion MP and all along the entire circumference of the end face 10 allows generating a 3D map of points of the annular area of the end face 10 centered on the fuel pellet axis B and corresponding to the measuring portion MP.

The measuring module 48 may then be configured to compare the 3D map to an expected map to detect and/or classify defects of the end-faces 10 of the fuel pellet 4.

Besides, the 3D map may be used to generate images that may e.g. be presented to an operator for checking the detection operated by the measuring module 48.

In one example, the measuring module 48 is configured for generating a 3D image file corresponding to the 3D map and coding a 3D image representing the end face 10 as a function of the measures performed above.

Optionally or alternatively, the measuring module 48 is configured for generating a 2D image file coding a 2D image corresponding to the 3D map, the 3D relief of the end face 10 being coded in the 2D image, e.g. in grey shades or with colors.

In one example, a 2D image represents a band with two parallel sides, one side corresponding to the peripheral edge of the end face 10 and the other side corresponding to the inner edge of the rim 14.

Alternatively or optionally, a 2D image represents a disc having an outer side corresponding to the peripheral edge of the end face 10 and an inner side corresponding to the inner edge of the rim 14.

Optionally, the supporting device 20 is configured for moving the pellet 4 in translation along the pellet axis A while rotating the pellet 4 and measuring the pellet 4 with the optical measuring device 40. This allows inspecting the pellet 4 over the circumference of the pellet 4 while conveying the pellet 4 along the rollers 24.

The axial movement is for example imparted to the fuel pellet 4 by the driving device 32, the pushing member 34 being conveyed along the rollers 24 with pushing the fuel pellet 4 along the rollers 24.

Preferably, in case each end face 10 has a dish 12, a rim 14 and a chamfer 14, the pushing member 34 is configured for contacting the center of the dish 12 of an end face 10 of the fuel pellet 4 for pushing the fuel pellet 4 without contacting the rim 14 and/or the chamfer 14, more specifically without contacting or hiding the rim portion and/or the chamfer portion located in the reference axial plane RAP. Hence, the pushing member 34 will not intercept the light beam 44 at least in the area where the distances are measured..

The light emitter 42 and the light detector 46 are preferably configured such that the light beam 44 extends along the pellet axis A over an extension that is greater than the length of the pellet 4 plus the distance travelled by the fuel pellet 4 during at least one complete rotation of the fuel pellet 4 about the pellet axis A.

This allows measuring the geometrical parameters of the fuel pellet 4 over the entire circumference of the end faces 10 while the fuel pellet 4 travels between the light emitter 42 and the light detector 46 with intercepting the light beam 44.

In one embodiment, the light emitter 42 and the light detector 46 are preferably configured such that the light beam 44 extends along the pellet axis A over an extension that allows measuring simultaneously a plurality of fuel pellets, e.g. two fuel pellets, three fuel pellets or more.

In the embodiments using a bi-dimensional light emitter 42 and a bi-dimensional light detector 46, the light detector 46 comprises for example a matrix light sensor, that is a light sensor that comprises a plurality of light sensitive pixels arranged in a matrix.

Advantageously, the light detector 46 is configured to activate only a fraction of the light sensor that covers an area that is sufficient for performing the measurement(s) operated by the measuring module 48, the remaining fraction of the light sensor staying inactive.

The frame AF on Figure 6 illustrates an example of a possible active fraction of the light sensor, the remaining of the Figure 6 corresponding to the inactive fraction of the light sensor.

The active fraction may represent less than 20% of the area of the light sensor, even less than 10% of the area of the light sensor.

Using only a fraction of the light sensor allows a quicker processing by the light detector 46. In addition, it also simplifies the analysis performed by the measuring module 48 as only the relevant portions of the shadow are present in the data retrieved by the light detector 46 and the position of the sides, points and plane necessary for the measures are more easily and rapidly identified. It thus allows an increased throughput, i.e. an increased number of fuel pellets processed by time unit.

In one example, the light emitter 42 is configured for emitting the light beam in the form of light pulses, preferably upon instruction of the light detector 46. The light emitter 42 is thus driven by the light detector 46 and the light detector 46 is thus configured for instructing the light emitter 42 to emit light pulses.

In a known manner, the light detector 46 is capable of capturing 'images" at a given frequency, i.e. at a given number of images per time unit. The time between two successive images captured by the light detector 46 corresponds to the time that is necessary to collect the data from the light sensor of the light detector 46, in particular from the plurality of pixels of the light sensor.

The light detector 46 configured for driving the light emitter 42 emitting light pulses allows synchronizing the light emitter 42 with the light detector 46.

In addition, each "image" is captured by the light detector 46 with an exposure time, i.e. the duration of the exposition of the light sensor to the light beam emitted by the light emitter 42.

Preferably, the light detector 46 and the light emitter 42 are configured such that upon capture of an image, the light beam is emitted only during a fraction of the exposure time. To this end, the emission of the light beam is started after start of the exposure time and/or ended before the end of the exposure time.

In one embodiment, the duration of the light beam pulse emitted by the light emitter 42 for capturing an image is strictly inferior to the exposure time of light detector 46 for capturing this image. In one example, the exposure time is of 450 microseconds (µs) or less and the duration of the light pulse is comprised between 50 and 100 µs.

This allows obtaining a sharper shadow and thus enhancing the precision of the measure operated by the measuring module 48, namely when the fuel pellet 4 is rotated about the fuel pellet axis A and/or move axially along the fuel pellet axis A.

In addition, in particular when the light is generated using electroluminescent diodes (or LED) as light sources, this allows reducing motion blur, increases life expectancy of the light source(s) and/or increased light intensity as compared to a permanent lighting.

In the various examples, the measuring module 48 is preferably configured to compare a geometrical parameter (e.g. distance, length or area) to an expected value and for emitting a defect signal if a geometrical parameter differs from the expected value. The fuel pellet can thus be retrieved for further inspection and/or be rebutted.

In the various examples, the measuring module 48 is for example provided as a computer program that is executed by a data processing unit 58 comprising a memory 60 in which the computer program is stored and a processor 62 configured for executing the computer program stored in the memory 60. Alternatively, the measuring module 48 is provided as a Programmable Logic Device ("PLD"), e.g. a Field Programmable Gate Array ("FPGA"), or an Application Specific Integrated Circuit ("ASIC").

The inspection system 18 allows performing a method of inspecting a nuclear fuel pellet 4 that is rotationally symmetrical about a pellet axis A, the method comprising positioning the fuel pellet 4 on the supporting device 20 and determining at least one geometrical parameter of shadow generated by the fuel pellet 4 using the optical measuring device 40 to detect possible defects of the end faces 10 of the fuel pellet 4.

The inspection method comprises for example measuring a rim-to-rim length or rim-to-median plane length of the fuel pellet 4 at one or several locations on the circumference of the rims 14, preferably on the entire circumference of the rims 14, and/or measuring a chamfer-to-chamfer length or chamfer-to-median plane length of the fuel pellet 4, at one or several locations on the circumference of the chamfers 16, preferably on the entire circumference of the chamfers 16.

Measurements at different locations or over the entire circumference are perform by rotation the fuel pellet 4 about the pellet axis A while measuring the length, and optionally advancing the fuel pellet 4 along the pellet axis A, for measuring the lengths while conveying the fuel pellet 4 along the supporting device 20.

Owing to the invention, the optical measurement of geometrical parameters of the fuel pellet can be performed in a reliable manner and with a good precision. The optical measurement allows detecting defects affecting the periphery of the end faces of the fuel pellet 4, which is generally the case for defects such as surface losses and protrusions. Rotation of the fuel pellet about the pellet axis allows inspecting the entire circumference of the end faces of the fuel pellets.

The optical measurement using a light beam emitted along an optical axis that is perpendicular to the pellet axis can be performed even while the fuel pellet is axially conveyed, as the distance between the fuel pellet and the elements of the optical measuring device remains constant.

The optical measuring device provided as a 2D optical micrometer (or profilometer) allows measuring a plurality of lengths and/or areas of the shadow projected by the illuminated portion of the fuel pellet 4.

The optical measuring device provided as a linear optical micrometer allows measuring one length, e.g. a rim-to-rim length or a chamfer-to-chamfer length.

However, the advantage of linear optical micrometers compared with 2D optical micrometers is a very high measurement frequency (e.g. superior or equal to 2 kHz) for standard and commercial off-the-shelf devices while keeping the same measurement accuracy (from 1 to 15 µm).

A plurality of linear optical micrometers may be combined, in the same or different reference axial planes RAP, for obtaining different lengths of the fuel pellet 4.

In one example, the inspection system comprises two optical measuring devices provided as linear optical micrometers, the optical measuring devices being arranged to measure different lengths of the fuel pellet 4.

In a specific example in which the end faces 10 of the fuel pellet 4 have a dish 12, a rim 14 and a chamfer 16, the inspection system 18 comprises a first linear optical micrometer arranged to measure a rim-to-rim length of the fuel pellet 4 and a second linear optical micrometer arranged to measure a chamfer-to-chamfer length of the fuel pellet 4.

The inspection system 18 and its operation has been described more specifically in conjunction with a fuel pellet 4 comprising end faces 10 each having a dish 12, a rim 14 and chamfer 16.

The inspection system 18 may also be used for the inspection of a fuel pellet 4 having end faces 10 having different shapes.

In particular, the inspection system 18 may also be used for the inspection a fuel pellet 4 having end faces 10 without chamfer 16, that is, only the rim 14 defines extends between the lateral face 8 and the dish 12. The rim 14 is e.g. only very slightly conical. The angle between the rim and a plan perpendicular to the pellet axis A is e.g. comprises between 0° and 5°.

Alternately, the inspection system 18 may also be used for the inspection of annular fuel pellets, that is, the dish 12 is replaced by an axial orifice extending through the fuel pellet 4 from one end face 10 to the other end face 10.

It is to be noted that the pushing device 32 as illustrated on Figure 4 is designed to push onto the dish 12 and may not provide a satisfactory operation for fuel pellet of annular design, that is deprived of a dish 12 on each end face 10. The pushing device 32 may thus be adapted to push on another surface of the fuel pellet 4 or that fuel pellet 4 may be inspected while being stationary axially along the pellet axis A.

The measurements performed on the shadow generated by the fuel pellet 4 are adapted as a function of the shape of the end faces 10 of the fuel pellet 4. In particular, end face-to-end face lengths, the end face-to-median transverse plane lengths or end-face-to-end transverse plane distances are taken at appropriate radial distances from the pellet axis A as a function of the profile of the end faces in side view along the optical axis of the optical measuring device.

In the illustrated embodiments, the inspection system 18 is configured such that the optical axis C is perpendicular to the reference axis B and thus to fuel pellet axis A. The shadow projected onto the light detector 46 thus corresponds to a side profile of the fuel pellet 4 including the side profiles of the end faces 10 thereof.

In other embodiments, the optical axis C is oblique relative to the fuel pellet axis A, i.e. neither perpendicular nor parallel to the fuel pellet axis A.

If the optical axis C is oblique relative to the fuel pellet axis A, the shadow projected onto the light detector 46 will be different as compared to the situation in which the optical axis C is perpendicular to the fuel pellet axis A.

However, the orientation of the optical axis C can be chosen to ease detection of specific defect on specific surfaces of the fuel pellets.

The optical axis C may be chosen e.g. such as to be tangent to a specific portion of one of the end surfaces 10, e.g. an angular sector of a rim 14 or an angular sector of a chamfer 16.

Preferably, the optical axis C defines an angle comprises between 0° and 25° with a transverse plane perpendicular to the fuel pellet axis A. An angle of 0° corresponds to the optical axis C being perpendicular to the fuel pellet axis A.

In the examples illustrated above, one fuel pellet 4 is inspected individually. Using the supporting device 20 and/or the moving device 32, a plurality of fuel pellets 4 can of course be inspected successively, each fuel pellet 4 being however inspected individually, with the fuel pellets 4 being spaced axially from each other.

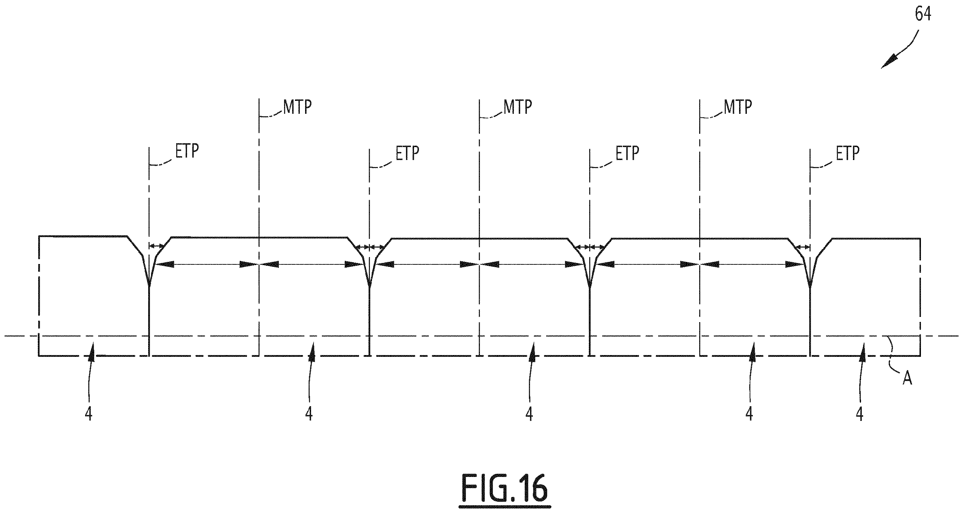

In another example, as illustrated on Figure 16, the inspection system 18 may be configured for the simultaneous inspection of a plurality of fuel pellets 4 stacked into a column 64 of fuel pellets 4 in which the fuel pellet axis A are coaxial. The fuel pellets 4 of the column 64 are in contact with each other. More specifically, the facing end faces 10 of each pair of adjacent fuel pellets 4 in the column 64 are in contact one with the other.

In such case, the measuring device 48 is configured performing measurements simultaneously on a plurality of fuel pellets 4 of the column 4. This is illustrated on Figure 16 by the median transverse plane MTP and the end transverse plane ETP illustrated for each fuel pellet that is being measured simultaneously (three fuel pellets on Figure 16), as well as distances measured with reference to these planes (see double sided arrows).

The column 64 may be stationary during the inspection. Alternatively, during the inspection, the column 64 is rotated such that each fuel pellet 4 rotates about its fuel pellet axis A and/or the column 64 is moved axially such that each fuel pellet 4 moves along its fuel pellet axis A. The inspection may thus be carried out for each end face 10 of each fuel pellet 4 of the column 64 along the entire circumference of the end face 10.

The simultaneous inspection of a plurality of fuel pellets 4 arranged into a column 64 may be implemented both the embodiment using at least one 2D optical micrometer or the embodiment using at least one linear optical micrometer, as described above for the inspection of one fuel pellet 4 at a time.

For sake of clarity of the drawings, as illustrated on Figure 16, only three fuel pellets 4 of the column 64 are simultaneously under inspection (fuel pellets 4 with reference planes determined).In practice, more than three fuel pellets 4 may be inspected simultaneously, in particular more than ten fuel pellets, for example, about twenty fuel pellets 4.

Besides, only some measures using the median transverse plane MTP and the end transverse plane ETP are illustrated on Figure 16, but of course all the different measures described above for one fuel pellet 4 are also applicable for a plurality of fuel pellets 4 inspected simultaneously.

In the examples described above, the inspection system 18 is configured for detecting defects on the end faces 10 of each fuel pellet 4.

Optionally or alternatively, the inspection system 18 may be configured for detecting defects affecting the lateral face 8 of the fuel pellet 4, in particular near each end face 10, or the junction zone between the lateral face 8 and each end face 10.

Indeed, a possible defect of a fuel pellet 4 is an end capping crack, that is a circumferential crack in the vicinity of the outer edge of the end face 10, either on the end face 10 itself or on the lateral face 8 in the vicinity of end face 10.

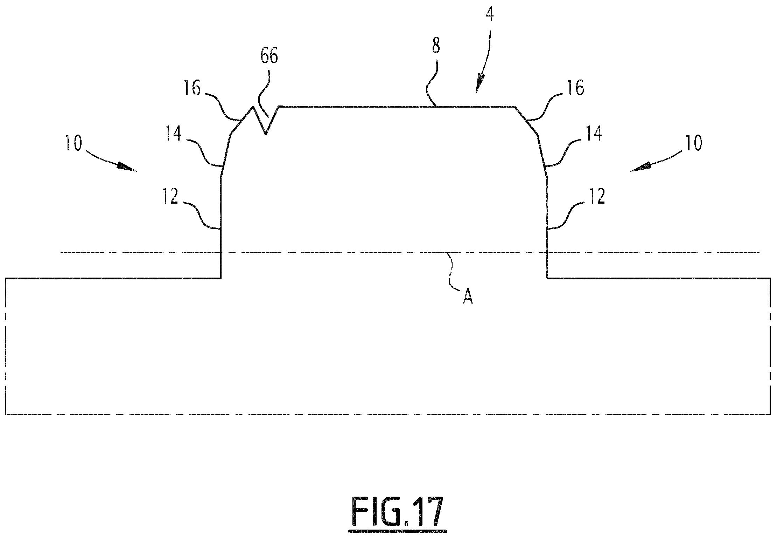

Figure 17 illustrated a shadow generated in a 2D optical micrometer by a fuel pellet 4 exhibiting an end capping crack on the side of the contour of the shadow corresponding to the lateral face 8 of the fuel pellet 4, in the vicinity of the end face 10 (on the left on Figure 17).

For comparison, the fuel pellet 4 is deprived of end capping crack near the other end face 10 (on the right on Figure 17).

The measuring module 48 of the inspection system 18 is for example configured for detecting that the portion of the contour of the shadow corresponding to the lateral face 8 of the fuel pellet 4 is not rectilinear and/or to detect a pattern such as a dent 66 into the portion of the contour of the shadow corresponding to the lateral face 8.

The detection of a defect affecting the lateral face 8 of the fuel pellet 4 may be detected with the inspection system 48 using a 2D optical micrometer as illustrated on Figure 17 or with an inspection system 48 comprising a linear optical micrometer. In the latter case, this could be detected as an interruption in the linear shadow generated by the fuel pellet 4 neat one end of said linear shadow.

In a general manner, the inspection system 48 makes it possible to detect any defect that affects the shadow generated by the fuel pellet 4 interrupting the light beam between the light emitted and the light detector.

## Claims

1. An inspection system for inspecting a nuclear fuel pellet (4) that is rotationally symmetrical about a pellet axis (A) and has a lateral face (8) and two end faces (10) or a plurality of such nuclear fuel pellets (4) arranged in a column (64), the inspection system comprising a supporting device (20) for supporting the fuel pellet(s) (4) such that the pellet axis (A) of each fuel pellet (4) coincides with a reference axis (B), and an optical measuring device (40) arranged for optically measuring the fuel pellet(s) (4), the optical measuring device (40) comprising a light emitter (42) configured for emitting a light beam propagating along an optical axis (C) and a light detector (46) arranged for receiving the light beam (44), wherein each fuel pellet (4) interrupts the light beam (44) and generates a shadow projected on the light detector (46), the optical measuring device (40) comprising a measuring module (48) configured for analyzing the shadow for detecting possible defects on the end faces (10) and/or the lateral face (8) of each fuel pellet (4).

2. Inspection system according to claim 1, wherein the measuring module (48) is configured for measuring at least one geometrical parameter of the shadow for detecting possible defects on the end faces (10) and/or the lateral face (8) of each fuel pellet (4), in particular.

3. Inspection system according to claim 1 or claim 2, wherein the optical axis (C) defines with a plane perpendicular to the reference axis (B) an angle that is comprised between 0° and 45°, preferably between 0° and 25°.

4. Inspection system according to any one of the preceding claims, wherein the supporting device (20) is configured for rotating each fuel pellet(s) (4) about its pellet axis (A).

5. Inspection system according to claims 4, wherein the measuring device (48) is configured for analyzing the shadow during at least one full rotation of each fuel pellet (4), such as to analyze the entire circumference of each end face (10) and/or the entire circumference of the lateral face (8) of each fuel pellet (4).

6. Inspection system according to any one of the preceding claims, wherein the inspection system is configured for conveying the fuel pellet(s) (4) axially along the reference axis (B).

7. Inspection system according to any one of the preceding claims, wherein the light beam (44) is linear and the shadow generated by each fuel pellet (4) is in the shape of a segment, the measuring module (48) being configured for measuring the length of the shadow generated by each fuel pellet (4) for determining the corresponding length of the fuel pellet (4) and the presence of defects on the end faces (10) and/or the lateral face (8) of the fuel pellet (4).

8. Inspection system according to any one of claims 1 - 6, wherein the light beam (44) is bi-dimensional and the shadow generated by each fuel pellet (4) is bi-dimensional.

9. Inspection system according to any one of the preceding claims, wherein the measuring module (48) is configured for analyzing the shadow generated by each fuel pellet (4) with determining a position of a transverse plane (MTP, ETP) of the fuel pellet (4) and determining at least one axial distance (L11, L12, L21, L22, D1, D2, D3) between the transverse plane (MTP, ETP) and a side of the contour of the shadow corresponding to an end face (10).

10. Inspection system according to any one of the preceding claims, wherein the measuring module (18) is configured to determine a position of a median transverse plane (MTP) of the fuel pellet (4) and to determine a length of the shadow generated by each fuel pellet (4) between the median plane (MTP) and said side of the contour of the shadow for determining the corresponding length of the fuel pellet (4).

11. Inspection system according to any one of the preceding claims, wherein the measuring module (48) is configured for analyzing the shadow generated by each fuel pellet (4) with, for at least one end face (10) or for each end face (10), determining the position of an end transverse plane (ETP) of the end face (10), the end transverse plane (ETP) being perpendicular to the fuel pellet axis (A), and calculating at least one axial distance (D1, D2, D3) between the end transverse plane (ETP) and the side of the contour of the shadow corresponding to said end face (10).

12. Inspection system according to any one of the preceding claims, wherein the measuring module (48) is configured for determining a 3D map of at least a portion of at least one of the end faces (10) of each fuel pellet (4) from the analysis of the shadow generated by the fuel pellet(s) (4).

13. Inspection system according to claim 12, wherein the measuring module (48) is configured for generating a 3D image file corresponding to the 3D map and coding a 3D image representing the end face (10) and/or for generating a 2D image file coding a 2D image corresponding to the 3D map.

14. Inspection system according to any one of the preceding claims, wherein the measuring module (48) is configured for detecting a surface loss of an end face (10) of each fuel pellet (4) and/or a protrusion on an end face (10) of each fuel pellet (4) and/or an end-capping between one of the end faces (10) and the lateral face (8) of each fuel pellet (4).

15. Method of inspecting a nuclear fuel pellet that is rotationally symmetrical about a pellet axis (A) using an inspection system according to any one of the preceding claims.
